# EUROPEAN PATENT APPLICATION

(11) **EP 2 071 713 A2**
(43) Date of publication of application: **17.06.2009**
(21) Application number: 08168133.0
(22) Date of filing: 31.10.2008
(51) Int. Cl.: H02K 53/00

(54) **Centrifugal driving electricity generation system for energy conservation**

(30) Priority: 10.12.2007 TW 96146949; 14.01.2008 TW 97101274; 25.04.2008 TW 97115168; 07.07.2008 TW 97125609; 30.09.2008 EP 08165526
(71) Applicant: Lin, Chu Fu, Yongkang City, Tainan County (TW)
(72) Inventor: Lin, Chu Fu, Yongkang City, Tainan County (TW)
(74) Representative: Lang, Christian

(57) **Abstract**

A centrifugal driving electricity generation system for energy conservation comprises a kinetic energy driving system powered with electric energy or fuel energy, an impelled rotary system, a gearing wheel group system, at holder, and a power generation system. In the principle of contrast between centrifugal and application of force, the lower kinetic energy driving system drives the impelled rotary system from a centrifugal terminal to make an effect of centrifugal force, which amplifies multiple times the original energy of kinetic energy driving system and makes the system link with a gearing wheel group system through an axis portion of the impelled rotary system to drive the higher power generation system to operate at a high speed for power generation at a rating rotation speed. Thus, the lower kinetic energy driving system may be used to drive the higher power generation system to generate electricity for achievement of energy conservation.

## Description

### BACKGROUND OF THE INVENTION

### 1. Field of the Invention

This invention relates to a centrifugal driving electricity generation system provided for energy conservation and particularly to a centrifugal driving electricity generation system that uses a kinetic energy driving system consuming less energy to drive an electricity generation system consuming more energy to generate electricity for achievement of energy conservation.

### 2. Description of the Related Art

Electric energy is quite essential in modem life and also the mother of industrial economy; in people's life, most devices and products are driven by the electric energy. There are many conventional ways of generating the electric energy and the energy is generally converted from energy; for example, thermal power converts thermal energy into the electric energy, and hydraulic power and wind power converts the energy into the electric energy. During the energy conversion, some energy is still converted into thermal energy and thus consumed, while some energy is rubbed and thus consumed. Further, regarding a power generator, electromagnetic induction is generally used to generate induction current from an induction system, which is led and supplied to a device or a storage device for a future use. In order to drive the power generator to generate the induction current, a rotor in the power generator must be driven to rotate and then induce a nearby magnetic-force component; in order to drive the rotor to rotate, an activating system is generally used.

Generally speaking, the activating system is an engine powered with diesel or gasoline as a fuel. With the diesel or gasoline that is consumed to drive the engine to run, the rotor is driven to rotate and thus the kinetic energy is converted into electric energy for output. Thus, a conventional power generation device continuously converts various forms of energy in various manners of conversion into the electric energy, so the power generation device requires various forms of external energy to operate. For example, in order to generate electricity, a thermal power generator and a small power generator must continuously combust the fuel that pollutes the environment, and a hydraulic power generator and a wind power generator are limited to the conditions of weather and geography of great universe, which is thus not easily implemented.

Consequently, because of the technical defects of described above, the applicant keeps on carving unflaggingly through wholehearted experience and research to develop the present invention, which can effectively improve the defects described above.

### SUMMARY OF THE INVENTION

It is a main object of this invention to provide a kinetic energy driving system powered with less energy. In a principle of contrast between centrifugal and application of force, a power generation system powered with higher energy is driven at a centrifugal terminal to generate power.

The system according to this invention comprises a power generation system that may be driven to generate electricity; a kinetic energy driving system that may be powered with inputted electric energy or the fuel and that drives an impelled rotary system through the centrifugal terminal to rotate, which makes outputted kinetic energy increase multiple times in the principle of contrast between the centrifugal and the application of force; a impelled rotary system the rotation center of which links with the power generation system, in which the centrifugal terminal is impelled by the kinetic energy driving system to drive the power generation system for power generation; a gearing wheel system grouped with several larger and smaller gearing wheels that are equipped on an axis between the power generation system and the impelled rotary system to transmit the kinetic energy and vary the constant rotation speed for linking with each system to normally operate; and a unit of holders that support and fix each system for achievement of safe operation.

### BRIEF DESCRIPTION OF THE DRAWINGS

Figs. 1 and 2 are 3d views illustrating an embodiment of this invention;
Fig. 3 is a 3D view of this invention;
Fig. 4 is a schematic view illustrating a device according to this invention that is installed on a plane surface underground;
Fig. 5 is a plane view of a second embodiment of this invention;
Fig. 6 is a plane view of a third embodiment of this invention; and
Fig. 7 is a schematic view illustrating the device according to this invention that is provided with a fan system.

### DETAILED DESCRIPTION OF THE PREFERRED EMBODIMENTS

Now, the present invention will be described more specifically with reference to the following embodiments. It is to be noted that the following descriptions of preferred embodiments of this invention are presented herein for purpose of illustration and description only; it is not intended to be exhaustive or to be limited to the precise form disclosed.

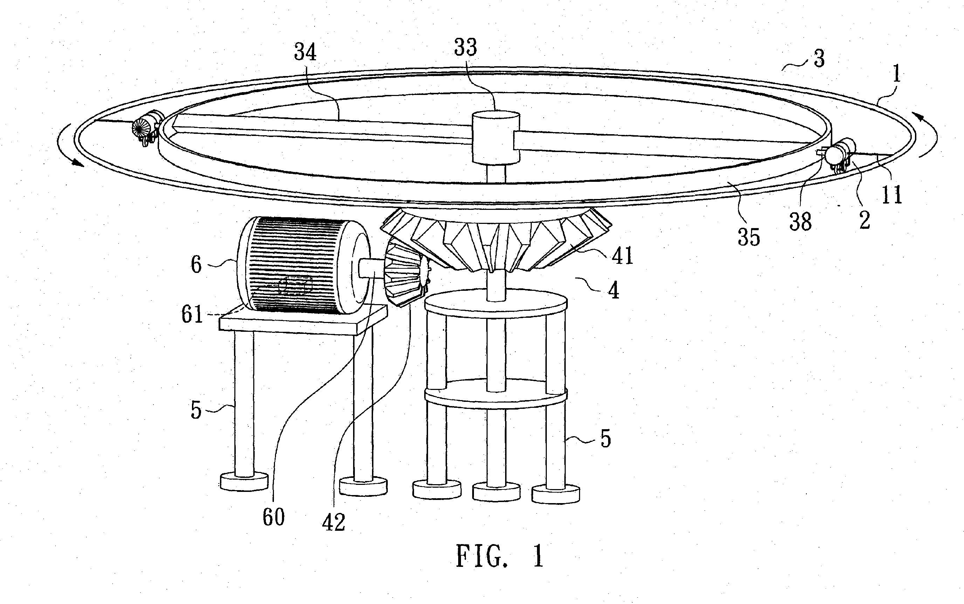

First, with reference to figures 1 through 3 illustrating an embodiment, a device according to this invention comprises a power generation system 6, a kinetic energy driving system 2, an impelled rotary system 3, a gearing wheel group system 4, and a holder 5.

The power generation system 6 is driven to generate electricity.

The kinetic energy driving system 2 is an original driver that may supply kinetic energy to drive an impelled rotary system 3 through a centrifugal terminal to rotate with electric energy or the kinetic energy converted from a fuel.

The impelled rotary system 3 is provided with an axis portion 33. The axis portion 33 is provided with a radially stretching portion 34. A centrifugal terminal is formed outside the stretching portion 34. The impelled rotary system 3 at the centrifugal terminal is driven by the kinetic energy driving system 2 to push the centrifugal terminal of impelled rotary system 3 move around along the axis portion 33. The axis portion 33 links with a power generation system 6 through a gearing wheel group system 4.

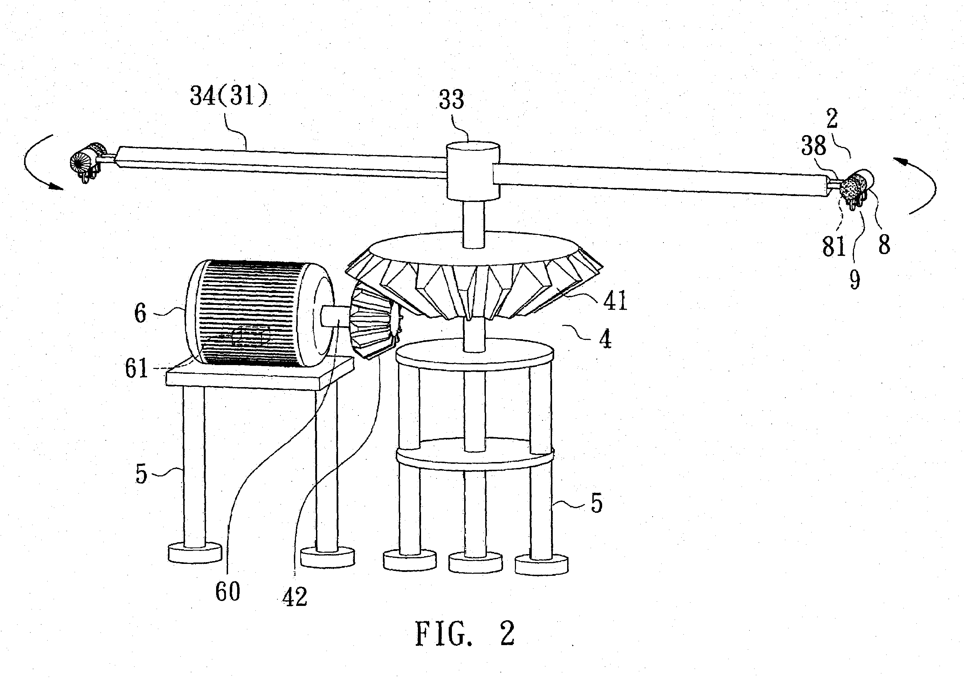

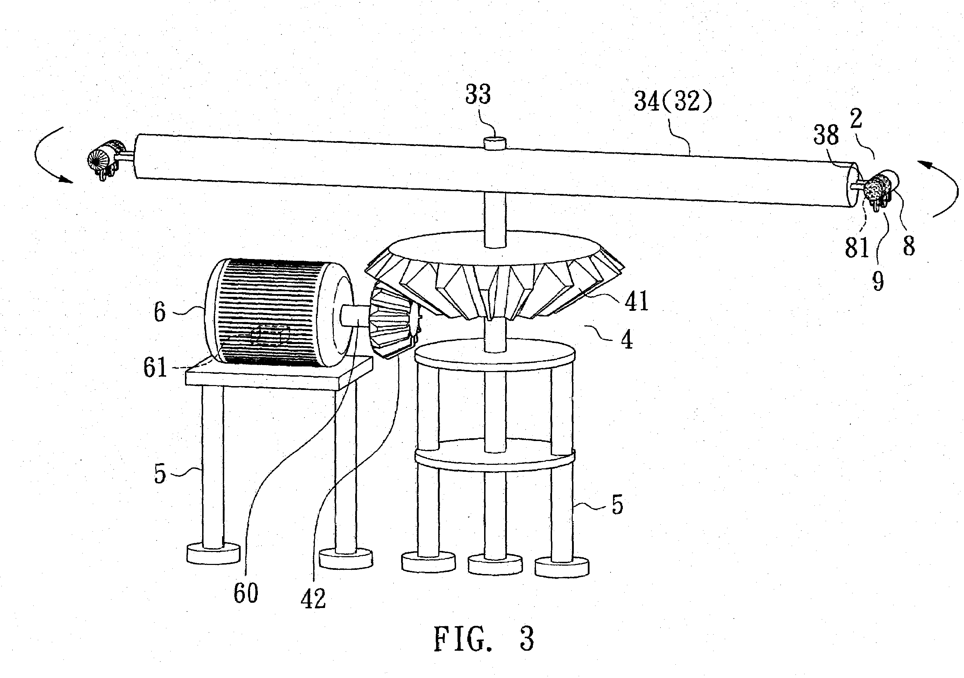

Further, the impelled rotary system 3 according to this invention may be designed into a system in a random form, the wind resistance of which is lower; as shown in figure 1, the centrifugal terminal of axis portion 33 is formed into a big circular gearing wheel 35. Alternatively, as shown in figure 2, the stretching portion 34 is formed with an awl-shaped rod 31 or in the shape of an plane wing, or as shown in figure 3, the stretching portion 34 is formed into a cylindrical rod 32 to lower the wind resistance to impelled rotary system 3 moving around. The impelled rotary system 3 may be made of a determined material depending on requirements.

The gearing wheel group system 4 comprises a large gearing wheel 41 and a small gearing wheel 42. The large gearing wheel 41 is connected to and links with the axis portion 33 of impelled rotary system 3. The large gearing wheel 41 and the small gearing wheel 42 may link with each other , in which the large and small gearing wheels may be gears and joggle and link with each other. Further, the small gearing wheel 42 is connected to a shaft 60 of the power generation system 6 and may drive the power generation system 6 to generate electricity. Next, the gearing wheel group system 4 is to transmit the kinetic energy and vary the constant rotation speed for linking with each system to normally operate, in which it may be a gear or a belt pulley.

The holder 5 supports and links with each system, as shown in figures 1 and 2 illustrating the gearing wheel system 4 and the power generation system 6, in order to safely run, and may be made of iron.

The kinetic energy driving system 2 according to this invention shown in figure 1 may be powered with the electric energy as a power source. The kinetic energy driving system 2 is powered with the electric energy supplied by the power supply system (1) provided at the exterior of big circular gearing wheel 35 through a power transmission system 11.

In figure 2, the kinetic energy driving system 2 is powered with the kinetic energy converted from the fuel energy. In the embodiment, an engine 8 is provided in the kinetic energy driving system 2 and powered with the fuel 81.

At the time of operation, with reference to figures 1 and 2, depending on a determined height and orientation, each of systems 5 is fixed with screws or in other manners onto each holder, as shown in figures 1 and 2 illustrating the gearing wheel system 4 and the power generation system 6. Then, in this invention, the kinetic energy driving system 2 powered with less energy is used to gradually fast impel a centrifugal terminal of the rotary system 3 for execution of high-speed rotation.

In this invention, in the principle of contrast between centrifugal and application of force, the driving kinetic energy supplied to the system 2 is made to increase multiple times, and meanwhile the large gearing wheel system 41 arranged on the axis of rotation center of the impelled rotation system 3 is used to link with the small gearing wheel group system 42 arranged on the axis of the higher power generation system 6 to rotate at a high speed, and the power generation is performed at various speed rates of rotation, in which the rates depends on the power generation system 6. Next, the electric energy is supplied from a power supply unit 61 where the power generation system 6 is arranged.

Accordingly, the kinetic energy driving system 2 consuming less energy drives the impelled rotary system 3 to operate, and the gearing wheel group system 4 links with the higher power generation system 6 to operate and generate electricity for achievement of power saving.

Further, the kinetic energy driving system 2 according to this invention may be designed into a system in a random form, the wind resistance and friction of which is lower; for example, it may be in the form of a bullet locomotive, an airplane head or the like that brings preferred functions.

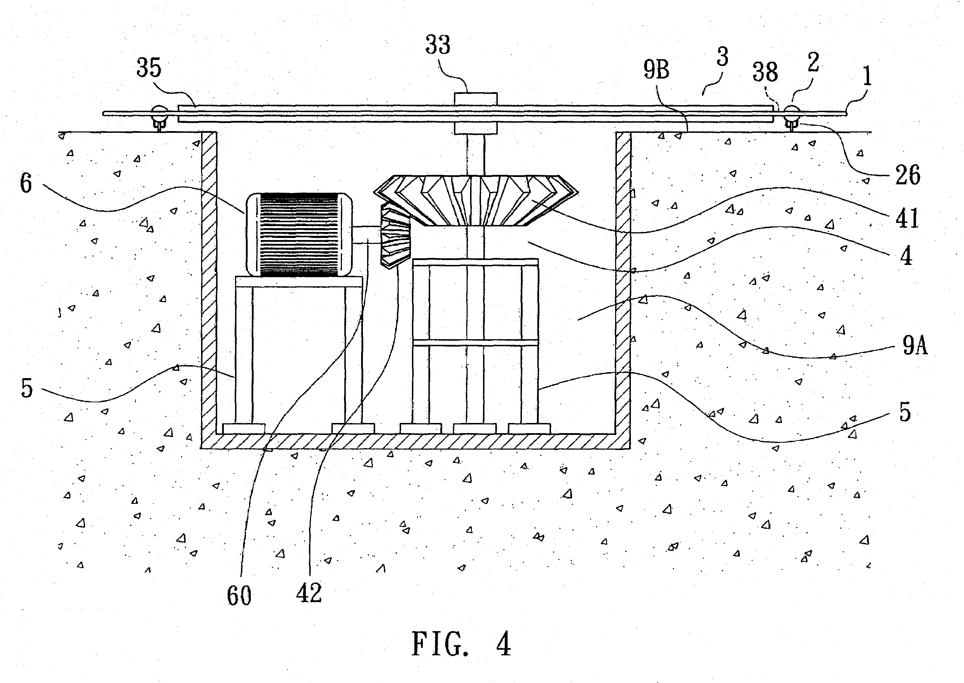

With reference to figure 4, a wheel 26 may be provided at the bottom of kinetic energy driving system 2 according to this invention shown in figures 1 through 3. In this invention, the power generation system 6, the holder 5, and the gearing wheel group system 4 are buried in a depressed site 9A of ground. The wheel 26 at the bottom of kinetic energy driving system 2 may run on the ground surface 9B for space saving. Further, the kinetic energy driving system 2 is connected to the impelled system 3 through a connector 38.

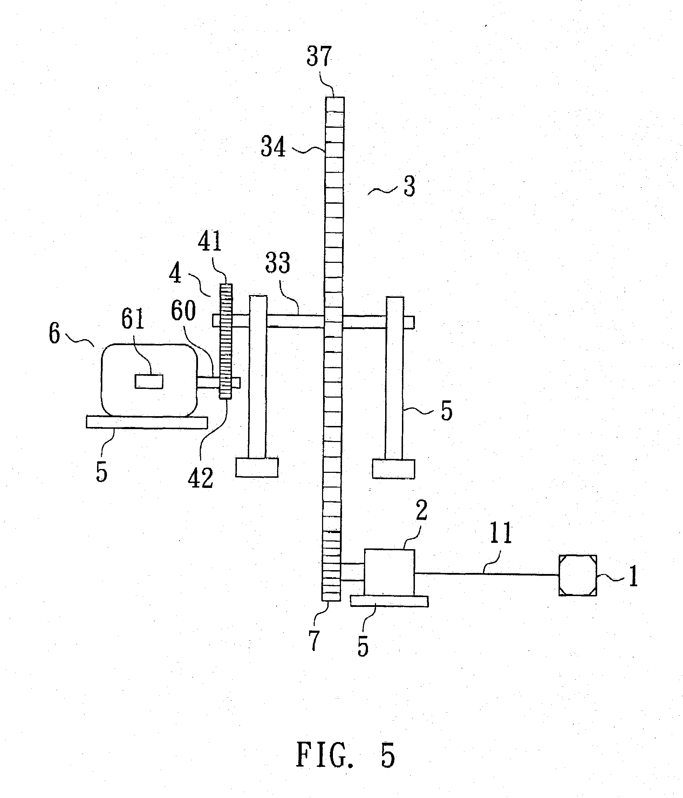

With reference to figure 5 and with cross-reference to figures 1 through 4, which illustrates a second embodiment of this invention, the impelled rotary system 3 is formed into the impelled rotary system 3 that may arranged vertically, correspondingly as shown in figures 1 through 3. In the embodiment, the system likewise comprises a power generation system 6, a kinetic energy driving system 2, an impelled rotary system 3, a gearing wheel group system 4, and a holder 5.

The power generation system 6 is driven to generate electricity.

The kinetic energy driving system 2 is an original driver that may supply kinetic energy to drive it. In the embodiment, a gearing wheel 7 may be provided at an axis portion of the kinetic energy driving system 2. The impelled rotary system 3 is driven by a centrifugal terminal to rotate with electric energy or the kinetic energy converted from a fuel. The power supply system 1 supplies the kinetic energy driving system 2 with the electric power that may be generally electricity, a fuel generator, or an equivalent power supply system in a manner same as that in the first embodiment.

The impelled rotary system 3 is provided with an axis portion 33. The axis portion 33 is provided with a radially stretching portion 34. A centrifugal terminal is formed outside the stretching portion 34. Further, a gearing wheel 37 is provided at the centrifugal terminal of impelled rotary system 3. The gearing wheel 37 is coupled with the gearing wheel 7 of kinetic energy driving system 2 and then links. The impelled rotary system 3 at the centrifugal terminal is driven by the kinetic energy driving system 2 to push the centrifugal terminal of impelled rotary system 3 move around along the axis portion 33. The axis portion 33 links with a power generation system 6 through a gearing wheel group system 4. In this invention, in the principle of contrast between the centrifugal and the application of force, the kinetic energy driving system 2 powered with less energy is made to increase multiple times of energy to drive the impelled rotary system 3 and further drive a power generation system 6 powered with higher energy for power generation, thereby economy energy being achieved.

The gearing wheel group system 4 comprises a large gearing wheel 41 and a small gearing wheel 42. The large gearing wheel 41 is connected to and links with the axis portion 33 of impelled rotary system 3. The large gearing wheel 41 and the small gearing wheel 42 may link with each other, in which the large and small gearing wheels may be gears and joggle and link with each other. Further, the small gearing wheel 42 is connected to a shaft 60 of the power generation system 6 and may drive the power generation system 6 to generate electricity. Next, the gearing wheel group system 4 is to transmit the kinetic energy and vary the constant rotation speed for linking with each system to constantly operate, in which it may be a gear or a belt pulley.

The holder 5 supports, fixes and links with each system to safely run, and may be made of iron, in which figure 5 illustrates only the power generation system 6, the kinetic energy driving system 2, the impelled rotary system 3, and the gearing wheel group system 4.

In the embodiment, the power supply system 1 supplies the kinetic energy driving system 2 with the electric power that may be generally electricity, a fuel generator, or an equivalent power supply system in a manner same as that in the first embodiment.

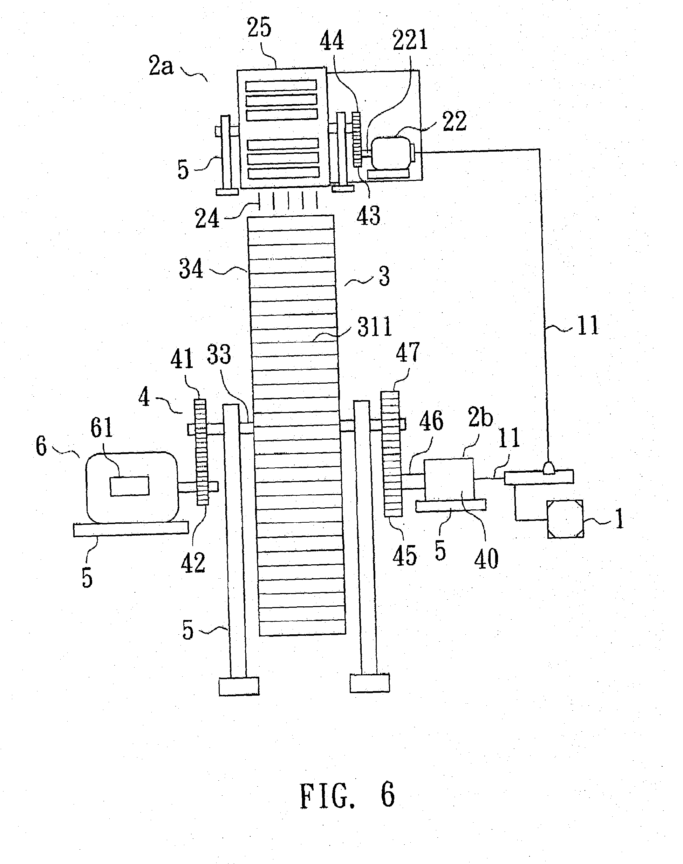

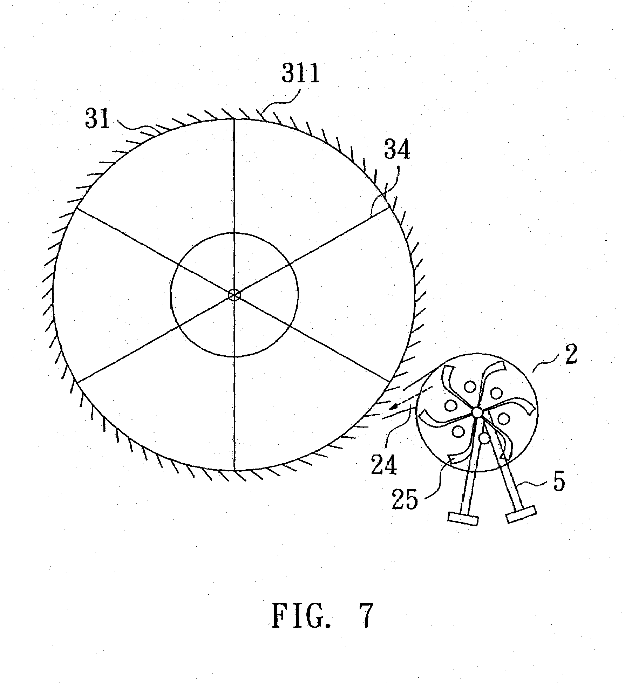

With reference to figures 6 and 7 illustrating a third embodiment of this invention, the device likewise comprises a power generation system 6, a kinetic energy driving system 2, an impelled rotary system 3, a gearing wheel group system 4, and a holder 5.

The impelled rotary system 3 is generally provided with an axis portion 33. The axis portion 33 is provided with a radially stretching portion 34, as shown in figure 6. A centrifugal terminal is formed outside the stretching portion 34. At the centrifugal terminal, a plurality of wind-trend blades 311 are provided. The impelled rotary system 3 at the centrifugal terminal is driven by the kinetic energy driving system 2, as described in detail below, to push the centrifugal terminal of impelled rotary system 3 move around along the axis portion 33. The axis portion 33 links with a power generation system 6 through a gearing wheel group system 4.

The kinetic energy driving system 2 comprises two power sources, in which a first power source may be a fan system 2a.

The fan system 2a is provided at a location adjacently between the wind-trend blades 311, comprising a motor 22. The motor 22 links with a gearing wheel 43 through a shaft 221 and drives another gearing wheel 44 of the fan system 2a to further drive another blade group 25 provided in the fan system 2a. The wind force generated when the blade group 25 runs may be blown out of an air blowing port 24 provided in the fan system 2a to drive the wind-trend blade 311 and further the impelled rotary system 3 to run. The fan system 2a is connected to a power transmission system 11. The power transmission system 11 is connected to a power supply system 1 as a power supply.

The second power source is provided with an assistant driving system 2b. The assistant driving system 2b is likewise connected to the power transmission system 11, and the power supply system 1 is used as a power supply. The assistant driving system 2b comprises a motor 40. The motor 40 is arranged where a shaft 46 stretches. The shaft 46 is connected to drive a gearing wheel 45. The gearing wheel 45 links with a gearing wheel 47 provided at the axis portion 33 of the impelled rotary system 3, may drive the axis portion 33, may assist the first power source, make the axis portion 33 of impelled rotary system 3 fast run, and generate the centrifugal kinetic energy to lower a load applied to the impelled rotary system 3 and increase the energy of rotation speed.

The gearing wheel group system 4 comprises a large gearing wheel 41 and a small gearing wheel 42. The large gearing wheel 41 is connected to and links with the axis portion 33 of impelled rotary system 3. The large gearing wheel 41 and the small gearing wheel 42 may link with each other to drive the power generation system 6 for power generation, in which the large and small gearing wheels may be gears and joggle and link with each other.

Accordingly, in the principle of contrast between the centrifugal and the application of force, the kinetic energy driving system 2 powered with less energy is made to increase multiple times of wind energy to drive the impelled rotary system 3 and further drive a power generation system 6 powered with higher energy for power generation, thereby economy energy being achieved.

The holder 5 supports, fixes and links with each system to safely run, and may be made of iron.

In the embodiment, the power supply system 1 may be generally electricity, a fuel generator, or an equivalent power supply system. Further, the power transmission system 11 comprises electric wires, a switch and the like. The embodiment is implemented in a manner same as that in the first embodiment.

In this invention, the principle of contrast between the centrifugal and the application of force indicates that a torque (moment of force) contrasts with the rotation center apart from an object. From the description made above, the distance of turning radius of an object has relation to the magnitude of a driving force applied to the load and increases with constant magnification. The diameter of axis of the power generation system 6 does not increase with constant magnification when the generating capacity increases with magnification. Thus, in the principle, the diameter of impelled rotary system 3 according to this invention is higher, the less the energy of kinetic energy driving system 2 is consumed to drive the impelled rotary system 3 and then the higher power generation system 6 for power generation, energy conservation being thereby achieved.

In the three embodiments of this invention, the principle of contrast of the centrifugal with the application of force and the centrifugally rotary kinetic energy are applied, and thus the lower kinetic energy driving system 2 is made to drive the impelled rotary system 3 from the centrifugal terminal, link with the gearing wheel group system 4, and then drive the higher power generation system 6 arranged in the rotation center for power generation and supply.

For example, when the higher power generation system 6 consumes ten thousand kw to generate electricity, the lower kinetic energy driving system 2 consumes 5 thousand kw to work, and then extra electric energy of 5 thousand kw may be utilized. Regarding practicability of this invention, the spare electric energy may fully be recycled for effective use, which lowers the pollution during power generation and saves energy for energy conservation and environmental protection.

If you have a question on the practicability and structure of this invention, the applicant would like to personally account for this invention to make clear. Alternatively, the applicator provides you with a real object according to this invention for your examination and testing.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A centrifugal driving electricity generation system for energy conservation, comprising:
a kinetic energy driving system supplying kinetic energy to drive it;
a impelled rotary system being provided with an axis portion provided with a radial portion stretching to a centrifugal terminal, in which the impelled rotary system at the centrifugal terminal is formed with the kinetic energy driving system to drive the centrifugal terminal of impelled rotary system to move around along the axis portion; and
a gearing wheel group system comprising a large gearing wheel and a small gearing wheel, in which the large gearing wheel is connected to and
links with the axis portion of impelled rotary system, the large gearing wheel and the small gearing wheel links with each other, and the small gearing wheel is connected to a shaft of the power generation system and drives the power generation system to generate electricity.

2. The centrifugal driving electricity generation system for energy conservation according to claim 1, wherein a holder is provided in more than one of the kinetic energy driving system, impelled rotary system, gearing wheel group system, and power generation system.

3. The centrifugal driving electricity generation system for energy conservation according to claim 1, wherein the large gearing wheel is a large gear, the small gearing wheel is a small gear, and the large gearing wheel links with the small gearing wheel by joggling the large and small gears.

4. The centrifugal driving electricity generation system for energy conservation according to claim 1, wherein the kinetic energy driving system is connected to a power supply system through a power transmission system and powered.

5. The centrifugal driving electricity generation system for energy conservation according to claim 4, wherein the kinetic energy driving system mainly comprises a motor.

6. The centrifugal driving electricity generation system for energy conservation according to claim 1, wherein the kinetic energy driving system is provided with an engine and driven by a fuel system with power.

7. The centrifugal driving electricity generation system for energy conservation according to claim 1, wherein at the centrifugal terminal, a plurality of wind-trend blades are provided, the kinetic energy driving system comprises two power sources, in which a first power source is a fan system, the fan system is provided at a location adjacently between the wind-trend blades, the wind-trend blade is blown with wind force generated by the fan system to make the impelled rotary system rotate, and the second power source is provided with an assistant driving system that connects to and drives a gearing wheel that links with a gearing wheel provided at the axis portion of impelled rotary system and drives the axis portion to assist the first power source.

8. The centrifugal driving electricity generation system for energy conservation according to claim 7, wherein the assistant driving system is connected to a power transmission system and the power transmission system is connected to and powered by the power supply system.

9. The centrifugal driving electricity generation system for energy conservation according to claim 7, wherein the fan system comprises a motor that links with a gearing wheel through a shaft and drives a blade group additionally provided in the fan system.

10. The centrifugal driving electricity generation system for energy conservation according to claim 1, wherein a gearing wheel is provided in the kinetic energy driving system, a gearing wheel is provided at the centrifugal terminal of impelled rotary system, and the gearing wheel is coupled with the gearing wheel of kinetic energy driving system and then links.

11. The centrifugal driving electricity generation system for energy conservation according to claim 1, wherein the kinetic energy driving system is connected to the impelled system through a connector.
